# FASCICULE DE BREVET EUROPEEN

(11) **EP 1 801 455 B1**
(45) Date de publication et mention de la délivrance du brevet: **08.04.2009**
(21) Numéro de dépôt: 06301217.3
(22) Date de dépôt: 05.12.2006
(51) Int. Cl.: F16H 3/093, F16H 3/10

(54) **Boîte de vitesses manuelle ou robotisée à passage sous couple à trois arbres parallèles**
Manuelles oder automatisiertes Lastschaltgetriebe mit drei parallelen Wellen
Manual or automated powershift transmission with three parallel shafts

(30) Priorité: 22.12.2005 FR 0554013
(43) Date de publication de la demande: 27.06.2007
(73) Titulaire: Renault SAS, 92100 Boulogne Billancourt (FR)
(72) Inventeur: Raoul, Michel, 78990 Elancourt (FR); Rodrigues, Philippe, 78570 Andresy (FR)
(74) Mandataire: Rougemont, Bernard

(56) Documents cités:
- EP-A- 0 046 373
- EP-A- 1 039 171
- EP-A- 1 067 312
- EP-A- 1 273 825
- FR-A- 2 799 252
- FR-A- 2 821 652
- FR-A- 2 841 956
- FR-A- 2 852 651
- FR-A- 2 869 571
- US-A- 4 461 188
- US-A1- 2004 149 080

## Description

L'invention concerne une boîte de vitesses manuelle ou robotisée de véhicule automobile.

Elle concerne plus particulièrement une boîte de vitesses à arbres parallèles et à engrenages comportant un seul arbre primaire et deux arbres secondaires non concentriques entraînant une même couronne de différentiel.

Plus précisément, elle a pour objet une boîte de vitesses à arbres parallèles et à engrenages comprenant un seul arbre primaire portant un ensemble de dentures fixes, et deux arbres secondaires non concentriques, qui portent des pignons fous engrenant avec lesdites dentures fixes et susceptibles d'être couplés sélectivement avec l'arbre qui les porte par des dispositifs de couplage pour engager les différents rapports de la boîte.

Par la publication EP 00 46 373, qui montre toutes les caractéristiques du préambule de la revendication indépendante 1, on connaît une telle boîte de vitesses, dans laquelle les deux arbres secondaires entraînent un même pignon de sortie par deux pignons de descente.

On connaît par ailleurs, de la publication EP 1 273 825, une boîte de vitesses, dans laquelle les pignons fous de rang supérieur à un sont associés à des coupleurs coniques αuto-αssistés, de manière à passer les rapports correspondants sous couple. Toutefois, la disposition proposée dans cette publication ne permet de disposer que de cinq rapports de marche avant.

La présente invention vise à réaliser une boîte de vitesses ne comprenant qu'un seul arbre primaire, permettant notamment de disposer de six rapports de marche avant à passages consécutifs sous couple.

Dans ce but, elle propose qu'un dispositif de synchronisation et de crabotage soit disposé entre les pignons fous de première et de marche arrière, et que les dispositifs de couplage des pignons fous des rapports de rang supérieur à un soient des coupleurs coniques auto-assistés, les pignons fous des rapports de rang supérieur à un de même parité étant groupés par deux à l'exception du pignon fou de deuxième qui est isolé.

De préférence, le pignon fou de première est monté sur une roue libre.

Grâce à ces dispositions, tous les changements de rapports consécutifs de cette boîte peuvent s'effectuer sous couple, bien qu'elle ne possède qu'un seul arbre d'entrée relié au moteur par un seul embrayage d'entrée.

D'autres caractéristiques et avantages de l'invention apparaîtront clairement à la lecture de la description suivante d'un mode de réalisation de celle-ci, en se reportant aux dessins annexés, sur lesquels
- la figure 1 est une vue schématique en coupe à plans rabattus passant par les axes des arbres secondaire haut, primaire et secondaire bas, selon un premier mode de réalisation de la boîte proposée, où les entraxes primaire / secondaires sont différents, avec des pignons d'attaque de couronne de différentiel de même taille, et un groupe de première marche arrière sur l'arbre secondaire bas,
- la figure 2 est une vue analogue d'un second mode de réalisation de l'invention, où les entraxes primaire / secondaires sont identiques, avec des pignons d'attaque de couronne de différentiel de taille différentes, et un groupe de première marche arrière sur l'arbre secondaire haut, et
- les figures 3 et 4, indiquent les pignons utilisés sur chaque rapport respectivement sur les figures 1 et 2.

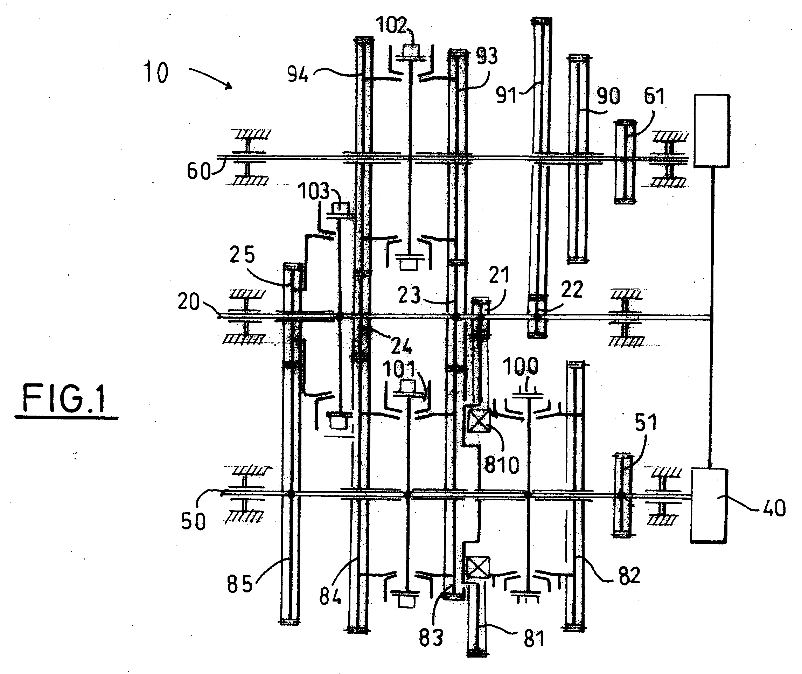

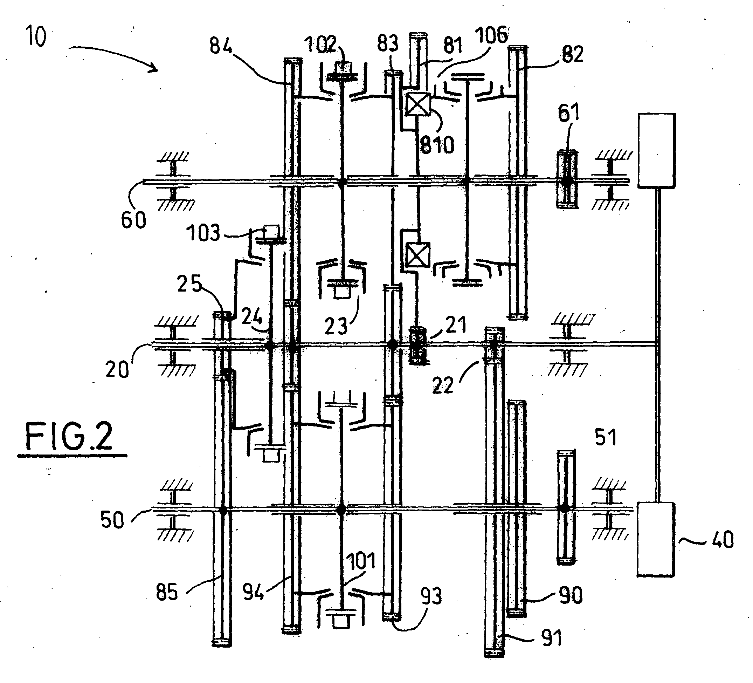

La boîte de vitesses 10 illustrée par les figures 1 et 2 comporte un premier arbre primaire 20 monté à rotation dans un carter (non représenté), et entraîné par un moteur par l'intermédiaire d'un embrayage 40 de type classique simple, sec ou humide. La boîte de vitesses comporte aussi un premier arbre secondaire 50, dit bas, et un deuxième arbre secondaire 60, dit haut, également mont és à rotation dans le carter.

Des engrenages sont agencés entre l'arbre primaire 20 et les arbres secondaires 50 et 60, de manière à transmettre le couple du véhicule à une couronne (non représenté) d'un différentiel (non représenté) entraînant les roues d'un véhicule. A cet effet, chaque arbre secondaire comporte un pignon de descente 51 et 61, qui engrène avec la couronne du différentiel.

Les engrenages sont const it ués de dent ures fixes 21, 22, 23, 24, et de la denture du pignon fou 25 portés par l'arbre primaire 20, qui engrènent avec des pignons fous et un pignon fixe portés par les arbres secondaires 50 et 60. Conformément à l'invention, ces pignons fous sont susceptibles d'être sélectivement liés en rotation aux arbres secondaires bas 50 et haut 60, et au primaire 20 pour la denture 25, par des moyens de couplage de type coupleur conique auto assisté indépendants, pour réaliser des engrenages indépendants correspondant sélectivement à au moins deux rapports de marche avant et un rapport de marche arrière. Conformément à l'invent ion, les dispositifs de couplage des pignons fous des rapports de rang supérieur à un, sont des coupleurs coniques auto assistés, tandis que le pignon fou de première peut disposer d'un coupleur à crabot de type conventionnel. Dans tous les cas, ce pignon fou de première doit cependant être monté sur une roue libre.

De façon non limitative, les coupleurs coniques auto assistés peuvent être tels que décrits dans le brevet FR 2 821 652. Ils sont par exemple mis en service par les actionneurs électromécaniques, tels que décrits dans la publication FR 2 813 935, intégrant les moyens de contrôle de mouvement et d'efforts appliqués aux dispositifs de couplage. L'engagement des rapports est obtenu, si on le souhaite, à l'aide d'un dispositif d'ensemble de commande tel que décrit dans les publications FR 2 833 331 et FR 2 820 484 comportant un axe de passage actionné manuellement par le conducteur, et au moins un autre axe de passage déplacé en rotation par une unité motrice.

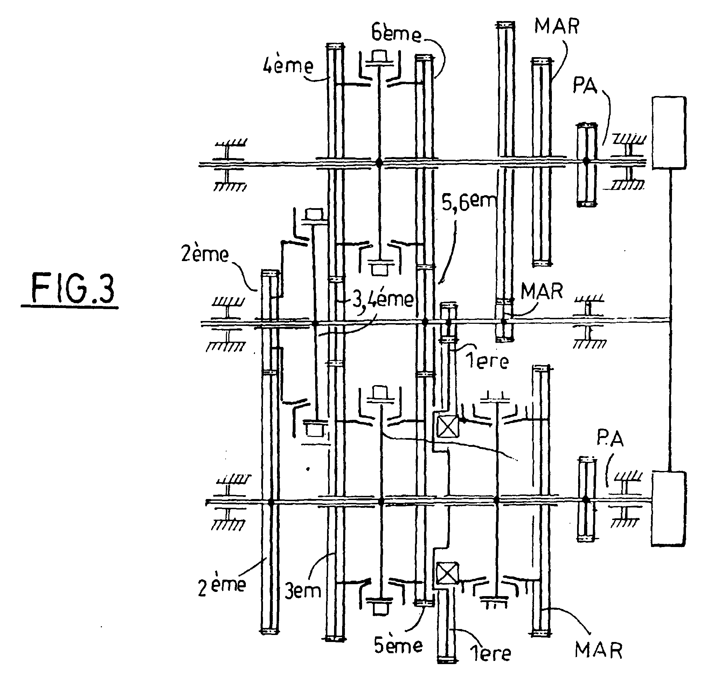

Sur les figures 1 et 3, la seconde denture 21 de l'arbre 20 engrène avec un unique pignon fou 81 monté sur une roue libre 810, porté par l'arbre secondaire bas 50, pour constituer le rapport de première. La première denture 22 engrène avec un pignon fou, le pignon 91 intermédiaire de marche arrière porté par l'arbre secondaire haut 60, dont le pignon intermédiaire 90 lié au pignon 91 engrène avec le pignon 82 porté par l'arbre secondaire bas 50 pour constituer le rapport de marche arrière. La troisième denture fixe 23 engrène avec deux pignons fous 83 et 93, portés respectivement par l'arbre secondaire bas 50 et l'arbre secondaire haut 60, pour constituer respectivement les rapports de cinquième et de sixième. Le quatrième pignon fixe 24 engrène avec deux pignons fous 84 et 94 portés respectivement par l'arbre secondaire bas 50 et l'arbre secondaire haut 60, pour constituer le rapport de troisième et de quatrième.

Enfin, la cinquième denture montée en pignon fou 25 sur l'arbre primaire 20, engrène avec un pignon fixe 85, porté par l'arbre secondaire 50, pour constituer le rapport de deuxième.

Un premier dispositif de crabotage double 100 permet de lier sélectivement en rotation à l'arbre secondaire 50 le pignon fou 81, pour obtenir le rapport de première, ou le pignon fou 82, pour obtenir le rapport de marche arrière.

Un premier dispositif de couplage double 101 (coupleur conique auto assisté) permet de lier en rotation à l'arbre secondaire 50 le pignon fou 84 pour obtenir le rapport de troisième, ou le pignon fou 83 pour obtenir le rapport de cinquième.

Un second dispositif de couplage double 102, identique au premier 101, permet de lier sélectivement en rotation à l'arbre secondaire 60 le pignon fou 94 pour obtenir le rapport de quatrième, ou le pignon fou 93 pour obtenir le rapport de sixième. Enfin, un troisième dispositif de couplage simple 103 permet de lier sélectivement en rotation à l'arbre primaire 20, le pignon fou 25, pour obtenir le rapport de deuxième.

Ainsi, seul le coupleur conique du rapport de deuxième est porté par l'arbre primaire 20, tandis que les autres coupleurs coniques sont agencés sur les deux arbres secondaires 50, 60, et qu'un dispositif de synchronisation et de crabotage classique, est disposé entre les pignons fous de première et de marche arrière.

Ces dispositifs de couplage permettent d'obtenir six rapports avant et un rapport de marche arrière. Le groupement des pignons de même parité, et le rapport de deuxième isolé, permettent de réaliser un passage sous couple entre les rapports qui se suivent, ou une rupture de couple pour les sauts de rapports, avec le fait que le rapport de première reste toujours enclenché grâce à la présence de la roue libre sur ce même rapport. Grâce à ces mesures, la boîte peut disposer de six rapports de marche avant avec des changements de rapport sous couple, tout en n'ayant qu'un seul arbre d'entrée 20, relié au moteur par un seul embrayage d'entrée 40.

Conformément aux figures 1 et 2, les distances entre les axes de l'arbre primaire 20 et l'axe de chaque arbre secondaire 50, 60, peuvent être différentes.

Dans cette configuration, les pignons de descente 51 et 61 engrenant avec la couronne de différentiel, sont de préférence de même taille, et les pignons fous 93 et 83 respectivement des rapports de sixième et de cinquième sont différents, ainsi que les pignons 84 et 94 pour respectivement les rapports de troisième et quatrième. Cette disposition est moins avantageuse car elle ne permet pas d'utiliser les mêmes pignons fous 83 et 93 pour la cinquième et la sixième pour la troisième et la quatrième 84 et 94, mais elle permet d'utiliser des mêmes pignons de descente 51 et 61.

Sans sortir du cadre de l'invention, les entraxes précités peuvent aussi être identiques. Dans ce mode de réalisation préféré, on peut ut iliser des dispositifs de couplage et des pignons fous identiques pour des rapports différents. Ainsi, les pignons 93 du rapport de sixième et 83 du rapport de cinquième peuvent être identiques ainsi que les pignons 84 et 94 pour respectivement les rapports de troisième et quatrième. En revanche, les pignons de descente 51 et 61 engrenant avec la couronne de différentiel ont alors un nombre de dents différent, le rapport du nombre de dents de deux pignons 51 et 61 correspondant dans ce cas, au saut des rapports quatrième sur troisième et sixième sur cinquième.

En se référant aux figures 1 et 3, le cheminement du couple du moteur à la couronne de différentiel sur le rapport de marche arrière est le suivant. Le couple est transmis du moteur à l'arbre primaire 20 par l'embrayage 40 fermé. Puis, de la denture fixe 22 au premier pignon intermédiaire de marche arrière 91 lié au second pignon intermédiaire 90, puis du second pignon intermédiaire de marche arrière 90 au pignon fou 82 de marche arrière qui le transmet à l'arbre secondaire 50 par l'intermédiaire du crabot double 100 en position crabotée sur le pignon 82 de l'arbre secondaire bas 50 qui le transmet, par l'intermédiaire du pignon de descente 51, à la couronne.

Le cheminement du couple du moteur à la couronne de différentiel sur le rapport de première est le suivant. Le couple est transmis du moteur à l'arbre primaire 20 par l'embrayage 40 fermé, puis de la denture fixe 21 au pignon fou 81, puis du pignon fou 81 à l'arbre secondaire 50 par le crabot double 100 en position craboté sur le pignon 81, et enfin, de l'arbre secondaire 50 au pignon fixe 51, qui le transmet à la couronne.

Le cheminement du couple du moteur à la couronne de différentiel sur le rapport de deuxième est le suivant. Le couple est transmis du moteur à l'arbre primaire 20 par l'embrayage 40 fermé, puis du pignon fou 25 couplé à l'arbre primaire via le dispositif de couplage 103 (coupleur conique auto assisté) couplé au pignon fixe 85, puis du pignon fixe 85 à l'arbre secondaire 50, et enfin, de l'arbre secondaire 50 au pignon fixe 51, qui le transmet à la couronne.

Le cheminement de couple sur le rapport de troisième est le suivant. Le couple est transmis du moteur à l'arbre primaire 20 par l'embrayage 40 fermé. Puis de la denture fixe 24 au pignon fou 84, qui transmet le couple à l'arbre secondaire bas 50 par l'intermédiaire du dispositif de couplage double 101, qui transmet le couple par l'intermédiaire du pignon de descente 51 à la couronne.

Le cheminement de couple sur le rapport de quatrième est le suivant. Le couple est transmis du moteur à l'arbre primaire 20 par l'embrayage 40 fermé. Puis de la denture fixe 24 au pignon fou 94, qui transmet le couple à l'arbre secondaire haut 60 par l'intermédiaire du dispositif de couplage double 102, qui transmet le couple, par l'intermédiaire du pignon de descente 61, à la couronne.

Le cheminement de couple sur le rapport de cinquième est le suivant. Le couple est transmis du moteur à l'arbre primaire 20 par l'embrayage 40 fermé. Puis de la denture fixe 23 au pignon fou 83, qui transmet le couple à l'arbre secondaire bas 50 par l'intermédiaire du dispositif de couplage double 101, qui transmet le couple par l'intermédiaire du pignon de descente 51 à la couronne.

Le cheminement de couple sur le rapport de sixième est le suivant. Le couple est transmis du moteur à l'arbre primaire 20 par l'embrayage 40 fermé. Puis de la denture fixe 23 au pignon fou 93, qui transmet le couple à l'arbre secondaire haut 60 par l'intermédiaire du dispositif de couplage double 102, qui transmet le couple par l'intermédiaire du pignon de descente 61 à la couronne.

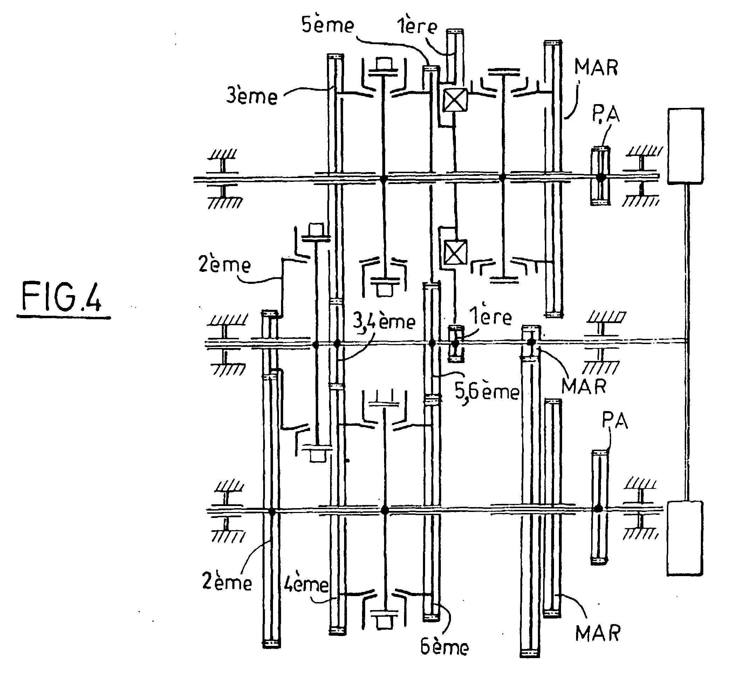

Dans le mode de réalisation des figures 2 et 4, les rapports de première et de marche arrière sont agencés sur l'arbre secondaire haut 60. Il en est de même des rapports impairs. Les distances entre les axes de l'arbre primaire 20 et des arbres secondaires 50 et 60 sont égales. Le pignon d'attaque 61 possède alors moins de dents que le pignon 51. Le pignon fixe 85 du rapport de deuxième reste sur l'arbre secondaire bas 51.

L'avantage de cette disposition des pignons, est une facilité de réalisation de la commande d'engagement des rapports, notamment la commande du groupe de synchronisation et de crabotage 106 des rapports de première et de marche arrière dont l'axe de passage manuel est en partie supérieure de la boîte, alors que selon l'architecture des figures 1 et 3, la commande doit contourner l'ensemble des pignons. Cette disposition facilite la réalisation de la commande interne, car elle se situe en position haute de la boîte.

Pour le reste, l'architecture et le fonctionnement de la boîte des figures 2 et 4, est similaire à celui des figures 1 et 3.

## Revendications

1. Boîte de vitesses à arbres parallèles et à engrenages comprenant un seul arbre primaire (20) relié au moteur par un seul embrayage d'entrée (40) portant un ensemble de dentures fixes (21, 22, 23, 24), et deux arbres secondaires non concentriques (50, 60) qui portent des pignons fous engrenant avec lesdites dentures fixes et susceptibles d'être couplés sélectivement avec l'arbre qui les porte par des dispositifs de couplage pour engager les différents rapports de la boîte, les deux arbres secondaires entraînant une même couronne de différentiel, par deux pignons respectifs (51, 61) de descente sur celle-ci, **caractérisée en ce que** les passages de vitesses sont réalisés sans couple, **en ce qu'**un dispositif de synchronisation et de crabotage (100) est disposé entre les pignons fous de première (81) et de marche arrière (82), et **en ce que** les dispositifs de couplage (101, 102, 103) des pignons fous des rapports de rang supérieur à un, sont des coupleurs coniques auto assistés, les pignons fous des rapports de rang supérieur à un de même parité (83, 84 ; 93, 94) étant groupés par deux à l'exception du pignon fou de deuxième (25) qui est isolé.

2. Boîte de vitesses selon la revendication 1, **caractérisée en ce que** le pignon fou de première (81) est monté sur une roue libre (810).

3. Boîte de vitesses selon la revendication 1 ou 2, **caractérisée en ce que** le coupleur conique du rapport de deuxième (103) est porté par l'arbre primaire (20), tandis que les autres coupleurs coniques (101, 102) sont agencés sur les deux arbres secondaires (50, 60).

4. Boîte de vitesses selon l'une des revendications précédentes, **caractérisée en ce que** les entraxes de chaque arbre secondaire (50, 60) avec l'arbre primaire (20) sont différents, et **en ce que** les deux pignons d'attaque (51, 61) de la couronne de différentiel sont identiques.

5. Boîte de vitesses selon la revendication 4, **caractérisée en ce que** tous les pignons fous des rapports impairs (81, 83, 84) ainsi que le pignon fixe de deuxième (85) sont sur un arbre secondaire (50), tandis que les pignons (93, 94) des autres rapports pairs sont sur l'autre arbre secondaire (60).

6. Boîte de vitesses selon l'une des revendications 1 à 3, **caractérisée en ce que** les entraxes de chaque arbre secondaire (50, 60) avec l'arbre primaire (20) sont égaux, et **en ce que** les deux pignons d'attaque (51, 61) de la couronne de différentiel sont de taille différente.

7. Boîte de vitesses selon la revendication 6, **caractérisée en ce que** le groupe de première et de marche arrière est sur l'arbre secondaire haut.

## Claims

1. Gearbox with parallel shafts and gears, comprising a single primary shaft (20) connected to the engine by a single input clutch (40) bearing a collection of fixed tooth sets (21, 22, 23, 24) and two non-concentric secondary shafts (50, 60) which bear idling pinions that mesh with said fixed tooth sets and can be coupled selectively to the shaft that bears them by coupling devices in order to engage the various gear ratios of the box, the two secondary shafts driving one and the same differential annulus gear, via two respective step-down pinions (51, 61) thereon, **characterized in that** the gear changes are performed under torque, **in that** a synchromesh and claw coupling device (100) is positioned between the first gear idling pinion (81) and the reverse gear idling pinion (82), and **in that** the coupling devices (101, 102, 103) for the idling pinions of the ratios of rank greater than one are auto-assisted conical couplers, the idling pinions for the gear ratios of rank higher than one of the same parity (83, 84; 93, 94) being grouped in twos with the exception of the second gear idling pinion (25) which is by itself.

2. Gearbox according to Claim 1, **characterized in that** the first gear idling pinion (81) is mounted on a free wheel (810).

3. Gearbox according to Claim 1 or 2, **characterized in that** the second gear conical coupler (103) is borne by the primary shaft (20) whereas the other conical couplers (101, 102) are positioned on the two secondary shafts (50, 60).

4. Gearbox according to one of the preceding claims, **characterized in that** the inter-axis distances between each secondary shaft (50, 60) and the primary shaft (20) differ, and **in that** the two pinions (51, 61) that act on the differential annulus gear are identical.

5. Gearbox according to Claim 4, **characterized in that** all the idling pinions of the odd-numbered gear ratios (81, 83, 84) and the fixed second-gear pinion (85) are on one secondary shaft (50), whereas the pinions (93, 94) of the other even-numbered gear ratios are on the other secondary shaft (60).

6. Gearbox according to one of Claims 1 to 3, **characterized in that** the inter-axis distances between each secondary shaft (50, 60) and the primary shaft (20) are the same, and **in that** the two pinions (51, 61) that act on the differential annulus gear are of different sizes.

7. Gearbox according to Claim 6, **characterized in that** the group comprising first gear and reverse gear is on the top secondary shaft.

## Patentansprüche

1. Schaltgetriebe mit parallelen Wellen und Zahnradpaaren, das eine einzige Primärwelle (20), die mit dem Motor über eine einzige Eingangskupplung (40) verbunden ist und eine Gesamtheit fester Zahnungen (21, 22, 23, 24) trägt, und zwei nicht konzentrische Sekundärwellen (50, 60), die bewegliche Ritzel tragen, die mit den festen Zahnungen kämmen und wahlweise mit der sie tragenden Welle über Kopplungsvorrichtungen gekoppelt werden können, um die verschiedenen Gänge des Getriebes einzurücken, enthält, wobei die zwei Sekundärwellen dasselbe Tellerrad über zwei jeweilige Abtriebsritzel (51, 61), die an diesem vorgesehen sind, antreiben, **dadurch gekennzeichnet, dass** die Schaltvorgänge unter Drehmoment erfolgen, dass zwischen den beweglichen Ritzeln für den ersten Gang (81) und den Rückwärtsgang (82) eine Synchronisations- und Klauenkupplungvorrichtung (100) angeordnet ist und dass die Kopplungsvorrichtungen (101, 102, 103) der beweglichen Ritzel für Gänge mit Rang größer als Eins selbst unterstützte konische Koppler sind, wobei die beweglichen Ritzel der Gänge mit Rang größer als Eins derselben Parität (83, 84; 93, 94) mit Ausnahme des beweglichen Ritzels des zweiten Gangs (25), das isoliert ist, paarweise gruppiert sind.

2. Schaltgetriebe nach Anspruch 1, **dadurch gekennzeichnet, dass** das bewegliche Ritzel des ersten Gangs (81) an einem freien Rad (810) montiert ist.

3. Schaltgetriebe nach Anspruch 1 oder 2, **dadurch gekennzeichnet, dass** der konische Koppler (103) des zweiten Gangs von der Primärwelle (20) getragen wird, während die anderen konischen Koppler (101, 102) an den zwei Sekundärwellen (50, 60) angeordnet sind.

4. Schaltgetriebe nach einem der vorhergehenden Ansprüche, **dadurch gekennzeichnet, dass** die Mittenabstände jeder Sekundärwelle (50, 60) zu der Primärwelle (20) verschieden sind und dass die zwei Antriebsritzel (51, 61) des Tellerrades gleich sind.

5. Schaltgetriebe nach Anspruch 4, **dadurch gekennzeichnet, dass** sich alle beweglichen Ritzel (81, 83, 84) der ungeraden Gänge sowie das feste Ritzel (85) des zweiten Gangs an einer Sekundärwelle (50) befinden, während sich die Ritzel (93, 94) der anderen geraden Gänge an der anderen Sekundärwelle (60) befinden.

6. Schaltgetriebe nach einem der Ansprüche 1 bis 3, **dadurch gekennzeichnet, dass** die Mittenabstände jeder Sekundärwelle (50, 60) zu der Primärwelle (20) gleich sind und dass die zwei Antriebsritzel (51, 61) des Tellerrades unterschiedliche Größe haben.

7. Schaltgetriebe nach Anspruch 6, **dadurch gekennzeichnet, dass** sich die Gruppe aus dem ersten Gang und dem Rückwärtsgang an der oberen Sekundärwelle befindet.
